# DEMANDE DE BREVET EUROPEEN

(11) **EP 2 134 062 A2**
(43) Date de publication de la demande: **16.12.2009**
(21) Numéro de dépôt: 09162099.7
(22) Date de dépôt: 05.06.2009
(51) Int. Cl.: H04L 29/06, H04M 3/42

(54) **Procédé de gestion d'un appel entre deux systèmes de communication et systèmes de communication associés**

(30) Priorité: 06.06.2008 FR 0853743
(71) Demandeur: Alcatel Lucent, 75008 Paris (FR)
(72) Inventeur: Litteaut, Jacques, 78160 Marly le Roi (FR); Coulon, Stéphane, 92707 Colombes (FR); Rey, Jean-François, 29200 Brest (FR)
(74) Mandataire: Sciaux, Edmond

(57) **Abrégé**

La présente invention concerne un procédé de gestion d'appel entre un premier et un second système de communication, le second système étant du type permettant de traiter les appels entrants selon des règles prédéfinies. L'invention concerne également les systèmes de communication associés. Selon l'invention le procédé de gestion d'appel comprend les étapes successives de :
- spécification (E10, E11) par l'appelant d'un profil de règles souhaitées pour le traitement par le second système de communication d'un appel émis par l'appelant (1) ;
- transmission (E13) pendant l'établissement de l'appel dudit profil de règles souhaitées;
- traitement (E14, E16) de l'appel reçu par le second système de communication en fonction des règles prédéfinies et du profil de règles souhaitées transmis par l'appelant.

## Description

La présente invention se rapporte à la gestion des appels effectués entre un appelant d'un premier système de communication et un appelé d'un second système de communication.

De nos jours, les entreprises comme les particuliers peuvent mettre en place, dans leur système de communication, un certain nombre de services qui s'appliquent lors de la réception d'un appel. Ainsi, grâce aux commutateurs du réseau public, un particulier pourra, par exemple, rediriger les appels reçus sur son poste fixe automatiquement vers un numéro de téléphone mobile, vers une messagerie ou encore vers un poste de communication d'une résidence secondaire.

De même, les commutateurs d'entreprise permettent aux différents employés d'une entreprise de paramétrer leurs postes de communication afin que des règles de traitement d'appel s'appliquent aux appels entrants. Les services les plus connus obtenus par l'intermédiaire de ces règles sont notamment les services de filtrage, tels que l'interception ou la supervision d'un appel, et les services de redirection, tels que le regroupement de postes de communication, la distribution d'un appel ou les règles de gestion communément appelées « services patron-secrétaire ».

Cependant, ces différents services sont en général exécutés pour permettre une meilleure gestion des appels entrants, et ce, sans tenir compte des desiderata des appelants. Or, dans certains cas l'appelant peut désirer parler exclusivement à la personne appelée de l'entreprise et préfère donc laisser un message sur la messagerie de cette personne si cette dernière ne répond pas, plutôt que d'être redirigé vers un collègue ou un département qui lui est totalement inconnu. A l'inverse, si l'appelant nécessite une réponse susceptible d'être également connue par des personnes autres que l'appelé, il préférerait sans doute que son appel soit pris en charge par un service de redistribution d'appel plutôt qu'un service de messagerie.

Il existe à ce jour quelques solutions offertes à un appelant pour contourner un certain nombre de règles préalablement mises en place par un appelé. Notamment, à partir de systèmes de communication classiques ou de systèmes de communication par voix sur IP, un appelant peut utiliser le secret d'identité. Ainsi, lorsque l'appelant effectue un appel, son numéro ou son adresse est caché au système de communication de l'appelé. En conséquence, les différents services prévus sur le système de communication de l'appelé et nécessitant la connaissance du numéro ou de l'adresse de l'appelant ne peuvent pas être appliqués. Cependant, le secret d'identité ne fonctionne que pour un nombre limité de services comme par exemple la supervision, et n'empêche pas l'appel d'être filtré, redirigé ou intercepté lors de sa réception.

D'autre part, le protocole SIP utilisé pour établir des communications sur des systèmes de communication de voix sur IP, offre des extensions communément appelées « caller preference » (RFC3841) qui permettent à un appelant de spécifier la nature des terminaux vers lesquels est redirigé son appel. Plus précisément, les systèmes de communication de voix sur IP permettent à un appelé d'être joint sur plusieurs terminaux tels qu'un téléphone portable, un téléphone fixe ou un serveur de messagerie à partir d'un numéro ou adresse unique. En utilisant les extensions SIP, un appelant peut spécifier le type de terminal sur lequel il souhaite joindre l'appelé. Ainsi, si l'appelant spécifie qu'il souhaite uniquement joindre l'appelé sur un dispositif mobile et que le téléphone mobile de l'appelé n'est pas disponible, alors l'appel n'aboutit pas. En revanche, si l'appelant spécifie qu'il souhaite de préférence atteindre l'appelé sur un dispositif mobile et que le téléphone mobile de l'appelé n'est pas disponible, l'appel est redirigé vers le terminal fixe ou le serveur de messagerie.

Cependant, si les extensions SIP permettent à un appelant de spécifier le type de dispositif sur lequel il souhaite atteindre l'appelé, elles ne permettent pas de prendre en compte les desiderata de l'appelant quant aux services de filtrage ou redirection préalablement cités susceptibles d'être mis en place au sein du système de communication de t'appelé.

La présente invention vise à améliorer la gestion des appels en permettant la prise en compte des desiderata de services d'un appelant.

Dans ce but, un premier objet de l'invention concerne un procédé de gestion d'appel entre un appelant d'un premier système de communication et un appelé d'un second système de communication, le second système de communication étant du type permettant de traiter les appels entrants selon des règles prédéfinies choisies dans une liste de services comprenant au moins un service parmi les services d'interception d'appel, de supervision d'appel, de distribution d'appel, de regroupement d'utilisateurs ou de fonction d'appel de type « patron-secrétaires », le procédé étant du type comprenant les étapes successives de :
- spécification par l'appelant d'un profil de règles souhaitées pour le traitement par le second système de communication d'un appel émis par l'appelant ;
- transmission pendant l'établissement de l'appel dudit profil de règles souhaitées;
- traitement de l'appel reçu par le second système de communication en fonction du profil de règles souhaitées transmis par l'appelant,
le procédé étant **caractérisé en ce que** l'étape de spécification du profil de règles souhaitées consiste pour l'appelant à définir les règles souhaitées à partir de ladite liste de services récupérée par l'appelant préalablement à l'appel, et en ce que l'étape de traitement de l'appel reçu s'effectue en outre en fonction desdites règles prédéfinies.

De façon avantageuse, le procédé comprend en outre une étape de paramétrage, au niveau du second système de communication, des droits de l'appelant. Ainsi, lors de l'étape de traitement de l'appel, les règles du profil transmis peuvent être acceptées ou refusées en tout ou partie selon les droits paramétrés pour l'appelant.

Il peut également être envisagé que l'appelant connaisse, préalablement à l'appel, les services aptes à être exécutés sur le second système de communication. Dans ce cas, l'étape de spécification du profil de règles souhaitées consiste pour l'appelant à définir les règles souhaitées à partir d'une liste de services qui sont aptes à être exécutés par le second système de communication, ladite liste de services étant récupérée par l'appelant préalablement à l'appel.

Un second objet de l'invention concerne un système de communication pour l'émission par un appelant d'un appel vers un second système de communication, dans lesquels les appels entrants peuvent être traités selon des règles prédéfinies choisies dans une liste de services comprenant au moins un service parmi les services d'interception d'appel, de supervision d'appel, de distribution d'appel, de regroupement d'utilisateurs ou de fonction d'appel de type « patron-secrétaires », le système de communication comportant des moyens permettant à l'appelant de spécifier un profil de règles souhaitées pour le traitement dudit appel par le second système de communication, et des moyens de transmission dudit profil de règles souhaitées lors de l'établissement de l'appel vers ledit second système de communication, **caractérisé en ce que** ledit système de communication est apte à récupérer ladite liste de service préalablement à l'appel, et en ce que lesdits moyens permettant à l'appelant de spécifier ledit profil de règles souhaitées utilisent ladite liste récupérée.

D'autres caractéristiques et avantages de l'invention apparaîtront à la lecture de la description qui va suivre en références aux dessins annexés dans lesquels :
- La figure 1 représente schématiquement une architecture préférée de deux systèmes de communication ainsi que leurs interactions en vue de la gestion d'un appel selon l'invention.
- la figure 2 illustre, sous la forme d'un organigramme, les différentes étapes mises en oeuvre pour la gestion d'un appel entre les deux systèmes de la figure 1 selon un premier mode de l'invention.
- la figure 3 illustre, sous la forme d'un organigramme, les différentes étapes mises en oeuvre pour la gestion d'un appel entre les deux systèmes de la figure 1 d'un procédé gestion d'appel entre les deux systèmes de la figure 1 selon un second mode de l'invention.

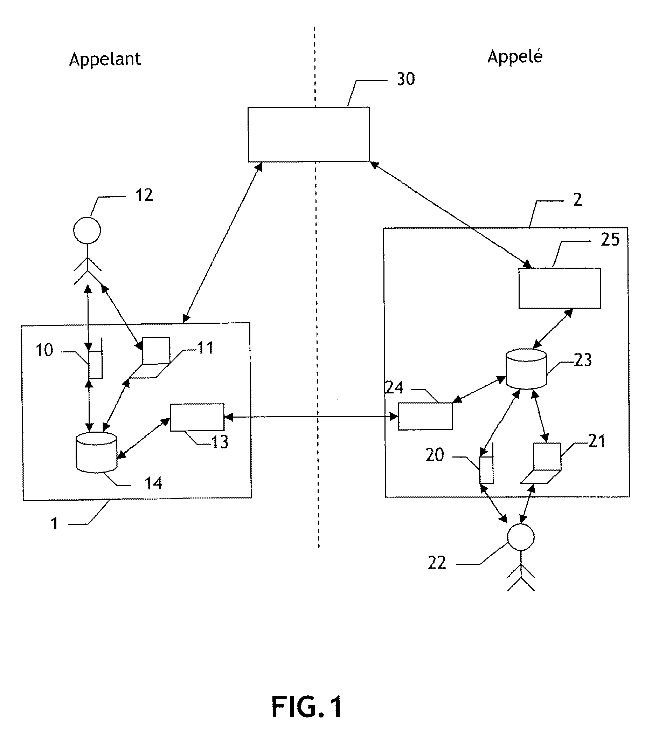

Comme le montre la figure 1, un premier système de communication 1 comporte classiquement un ensemble de terminaux 10, 11 à partir desquels un appelant 12 peut initier un appel vers l'un des terminaux 20, 21 d'un appelé 22 appartenant à un second système de communication 2.

Par souci de clarté, on considérera dans la suite le premier système de communication 1 du point de vue de l'appelant, et le second système de communication 2 du point de vue de l'appelé. Bien entendu, les rôles peuvent être intervertis.

Le second système de communication 2 permet classiquement de traiter les appels entrants selon des règles prédéfinies par les utilisateurs du système ou par le système lui-même. Ces règles correspondent à des services aptes à être exécutés par le second système, tels que l'interception d'appel, la supervision d'appel, la distribution d'appel, le regroupement d'utilisateurs ou une fonction d'appel de type « patron-secrétaires ».

Conformément au procédé de l'invention, un appelant 12 désirant appeler depuis le premier système de communication 1 un appelé 22 du second système de communication 2, spécifie des préférences relatives à la façon dont il souhaite que son appel soit traité par le second système de communication 2. Plus précisément, l'appelant 12 spécifie un profil de règles souhaitées pour le traitement par le second système 2 d'un appel qu'il désire émettre.

Cette étape de spécification peut se faire en aveugle, c'est-à-dire sans que l'appelant 12 ne connaisse a priori les règles prédéfinies au niveau du second système de communication 2 ou les services aptes à être réalisés effectivement par le second système de communication 2.

De manière différente, dans un mode appelé mode « publié », l'appelant 12 peut effectuer sa spécification à partir d'une connaissance, acquise préalablement à l'émission de l'appel, des services aptes à être réalisés par le second système de communication 2.

Dans les deux cas, une fois le profil de règles souhaitées spécifié, celui-ci est transmis au second système de communication 2 pendant l'établissement de l'appel. Puis, l'appel reçu par le second système 2 est traité en fonction des règles prédéfinies et du profil de règles souhaitées transmis par l'appelant 12.

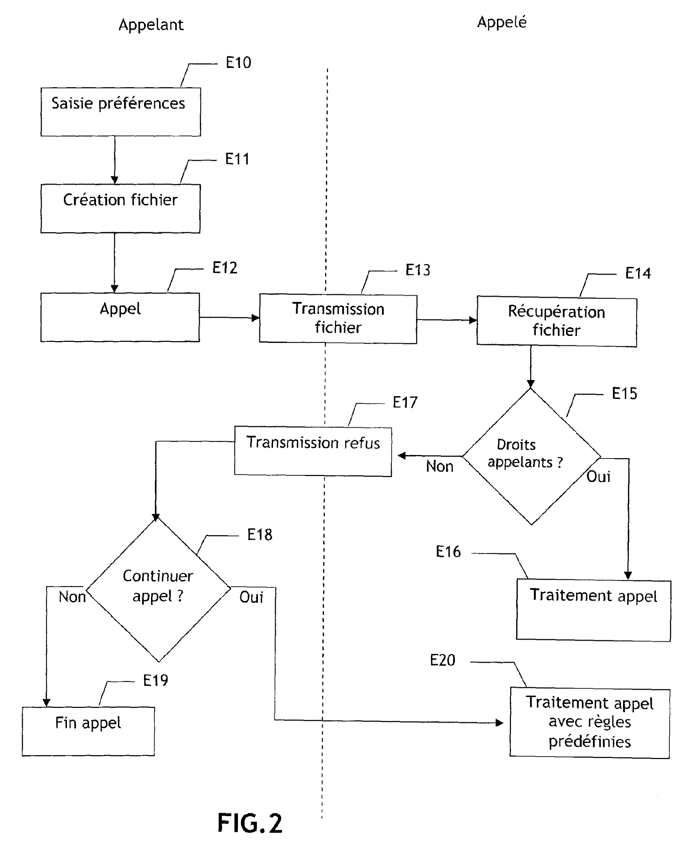

En référence aux figures 1 et 2, les différentes fonctionnalités du premier et du second système de communication ainsi que les différentes étapes mises en oeuvre pour la gestion d'un appel entre ces deux systèmes vont être détaillées dans le cas où l'appelant 12 ne connaît pas les services aptes à être exécutés sur le second système de communication 2 (mode « aveugle »).

Comme représenté sur la figure 2, préalablement à la saisie du numéro d'appel ou de l'adresse de l'appelé 22, l'appelant 12 commence par spécifier des règles souhaitées pour le traitement de son appel par le système de communication de l'appelé (étape E10 sur figure 2).

En effet, en fonction de la nature des renseignements ou des informations que l'appelant 12 désire demander ou communiquer à l'appelé 22, il peut lui sembler plus approprié que son appel soit, par exemple, redirigé vers une autre personne en cas d'absence de l'appelé 22. Au contraire, l'appelant 12 peut préférer laisser un message sur une messagerie et éviter que son appel soit redirigé. Il est donc intéressant que l'appelant 12 puisse, préalablement à l'appel, indiquer ses préférences. Une prise en compte de celles-ci au niveau du système de communication de l'appelé augmentera alors les chances, pour l'appelant, d'obtenir rapidement ou de communiquer de façon appropriée une information.

Pour permettre à l'appelant 12 de spécifier ses préférences, le premier système de communication 1 est équipé d'une application 13 de gestion de préférences. Cette application peut être implémentée sur chacun des terminaux 10, 11. Elle peut également être centralisée dans le système de communication 1 et être adaptée pour pouvoir être utilisée depuis les différentes interfaces disponibles sur chacun des différents terminaux 10, 11.

Dans le cas présent, l'appelant 12 ne connait pas la liste des services que le second système 2 est effectivement apte à exécuter. Ainsi, l'étape de spécification du profil de règles souhaitées consiste pour l'appelant 12 à définir les règles souhaitées à partir d'une liste prédéfinie de services susceptibles d'être exécutés par le second système de communication 2, sans savoir si ces services sont offerts par le second système 2.

La liste prédéfinie de services est par exemple stockée dans une mémoire de l'application 13. De tels services correspondent aux services couramment appliqués dans des systèmes de communication qui sont notamment des services d'interception d'appel, de supervision d'appel, de distribution d'appel ou de fonction d'appel de type « patron-secrétaire ».

Dans le cas où l'appelant 12 spécifie ses préférences depuis un ordinateur 11, l'application est adaptée pour afficher à l'appelant la liste de services contenus dans cette mémoire.

Avantageusement, l'appelant 12 spécifie ses préférences en sélectionnant uniquement les services qu'il désire voir appliqués par le second système de communication 2. Les services non sélectionnés pouvant alors être considérés comme non-désirés par l'appelant 12.

En variante, l'appelant 12 établit, à partir de la liste proposée par l'application 13, une hiérarchisation des services proposés. Plus précisément, l'appelant 12 classe dans une première catégorie les services qu'il veut voir appliqués en priorité, puis dans une seconde catégorie, les services qu'il accepte de subir. Cette deuxième catégorie regroupe les services qui s'appliqueront notamment dans le cas où les services à appliquer en priorité n'existent pas ou ne sont pas autorisés pour l'appelant 12 au niveau du second système de communication 2. Une dernière catégorie correspond aux services par lesquels l'appelant 12 ne veut pas que son appel soit traité (ceux qu'il refuse de subir). Les trois catégories ne sont pas nécessairement présentes et l'appelant peut spécifier uniquement les services qu'il veut voir appliqués en priorité ou bien ceux qu'il ne veut pas subir.

Une fois la sélection ou la catégorisation réalisée, l'application 14 enregistre alors cette sélection ou catégorisation sous la forme d'un profil de règles souhaitées et le transmet à un module 14 chargé de transformer le profil en un fichier transportable et interprétable par les différents systèmes de communication (Etape E11 sur figure 2).

Avantageusement, le fichier est un fichier XML. Ce format de fichier, grâce notamment à son système de balises, permettra, d'une part, une harmonisation des déclarations des profils de règles souhaitées au niveau des systèmes de communication des appelants et d'autre part, une simplification de l'interprétation des profils reçus au niveau des systèmes de communication des appelés. Des librairies contenant un ensemble de balises relatives à des services classiquement utilisés pourront être, de façon avantageuse, fournies aux différents systèmes de communication.

Une fois le processus de transformation du profil de règles souhaitées en fichier XML accompli, l'établissement de l'appel a lieu (Etape E12 sur figure 2). Lors de l'établissement de l'appel vers le terminal 20, 21 correspondant au numéro ou à l'adresse entré par l'appelant 12, le premier système de communication 1 insère le fichier créé à partir du profil de règles souhaitées dans un message d'établissement d'appel qu'il transmet au second système de communication 2 (Etape E13 sur figure 2). Le message d'établissement d'appel peut également comporter une information dont le but est d'indiquer que l'appelant 12 a fourni un profil de règles souhaitées.

Au niveau de la réception, et contrairement à un système de communication classique, l'appel reçu n'est pas directement soumis aux règles de traitement d'appel associées à l'appelant 22. En effet, sur détection du message de signalisation d'établissement d'appel contenant le fichier correspondant aux préférences de l'appelant 12, un module 24 d'extraction et d'analyse extrait dans un premier temps le fichier XML contenu dans le message puis le compare avec l'ensemble des règles prédéfinies stockées dans une base de données 23 pour le traitement d'un appel par le terminal 20, 21 (Etape E14 sur figure 2). Une fois la comparaison effectuée, l'appel peut être acheminé et traité en fonction des règles prédéfinies par l'appelé 22 et du profil de règles souhaitées transmis par l'appelant 12 (Etape E16 sur figure 2). En variante, le traitement de l'appel peut être subordonné au préalable à une autorisation, comme cela sera décrit ultérieurement.

Il convient de noter que l'expression « en fonction de » signifie que les règles prédéfinies et les règles contenues dans le profil de règles souhaitées sont, à défaut d'être appliquées, nécessairement prises en considération lors du traitement de la réception de l'appel entrant.

Les exemples non limitatifs suivants ont pour but d'illustrer différents cas de traitement en fonction des règles prédéfinies et des règles contenues dans le profil de règles souhaitées.

Dans un premier exemple, on considère qu'un utilisateur (appelé) du second système de communication 2 a préalablement prédéfini sur son terminal 20 la règle spécifiant que les appels reçus sur ce poste devaient être directement dirigés sur sa messagerie.

On suppose de plus que l'appelant 12 a spécifié, dans son profil, qu'il refusait qu'un quelconque service et en particulier qu'un service de messagerie s'applique à son appel. Dans ce cas, les règles du profil de l'appelant et les règles prédéfinies par l'appelé 22 peuvent être considérées comme antagonistes. Le module 24 demande alors au terminal de traiter l'appel soit en appliquant uniquement les règles prédéfinies par l'appelé 22 soit au contraire en appliquant uniquement les règles spécifiées dans le profil de règles souhaitées de l'appelant 12.

Dans un second exemple, on considère que le second système de communication 2 n'est pas apte à traiter un appel entrant au moyen d'un service de renvoi d'appel. On suppose de plus que l'appelant 12 a spécifié, dans son profil, qu'il désirait utiliser un service de renvoi d'appel. Dans ce cas, le module 24 s'aperçoit que la règle souhaitée par l'appelant 12 fait référence à un service que le second système ne peut pas réaliser. Le module 24 transmet alors l'appel au terminal 20 en lui demandant de traiter l'appel uniquement en fonction des règles prédéfinies.

Comme évoqué précédemment, le traitement de l'appel peut être subordonné à une autorisation. Pour ce faire, le procédé selon l'invention peut comprendre avantageusement une étape de paramétrage, au niveau du second système de communication 2, des droits pour les différents appelants (étape non représentée). Ainsi, un administrateur du système de communication associe, depuis une interface 25 d'administration, des droits de modification à chaque service apte à être exécuté par le second système 2. Les droits de modification consistent à autoriser ou non un appelant 12 à modifier un service se trouvant dans une règle prédéfinie par l'appelé 22. Ces droits peuvent alors être stockés dans la base de données 23 du système de communication 2 qui contient les règles prédéfinies.

En variante, il peut également être envisagé que le paramétrage des droits pour les différents appelants s'effectue par un appelé 22 depuis son terminal 20, 21. Dans ce cas, lorsque l'appelé 22 créé les règles prédéfinies au niveau de son terminal 20, 21, il spécifie également les services utilisés par lesdites règles qui peuvent être modifiés par un appelant 12.

Lorsque de tels droits ont été paramétrés sur le second système de communication 2, ils sont pris en considération par le module 24 au moment où celui-ci analyse les profils de règles souhaitées reçu. Ainsi, les règles du profil transmis peuvent être acceptées ou refusées en tout ou partie selon les droits paramétrés pour l'appelant.

L'utilisation de tels droits peut s'avérer particulièrement intéressante lorsque les souhaits spécifiés par l'appelant 12 dans son profil de règles souhaitées sont antagonistes avec les règles prédéfinies par l'appelé 22 comme cela a été précédemment décrit. En effet, dans un tel cas, si les droits préalablement paramétrés indiquent que l'appelant 12 peut modifier les règles prédéfinies, l'appel est alors traité selon les règles du profil. Au contraire, si l'appelant 12 n'a pas le droit de modifier les services, l'appel est traité uniquement selon les règles prédéfinies.

Avantageusement, lorsque le module 24 détecte que l'appelant 12 n'a pas les autorisations pour modifier les règles prédéfinies, il peut envoyer, à destination du premier système de communication 1, un message de signalisation indiquant le refus de prise en compte des préférences de l'appelant 12 par le second système de communication 2 (étape E17 sur figure 2).

Sur réception d'un tel message, le premier système de communication 1 demande à l'appelant 12 de confirmer son appel vers l'appelé 22 (étape E18 sur la figure 2). L'appelant 12 sait alors que son appel ne sera pas géré en fonction de ses préférences mais uniquement par les règles prédéfinies par l'appelé 22. Il peut alors choisir de mettre fin à l'appel (étape E19 sur la figure 2) ou confirmer son désir d'établir l'appel. Si le module 24 reçoit une telle confirmation, il demande d'acheminer et de traiter l'appel uniquement en fonction des règles prédéfinies (étape E20 sur la figure 2).

Comme précédemment mentionné, selon le premier mode décrit en référence à la figure 2, l'appelant 12 ne connaît a priori que le numéro ou l'adresse de l'appelé 22. En particulier, l'appelant 12 ne connaît pas les services offerts par le système de communication 2 de l'appelé 22. Ainsi, lorsque l'appelant spécifie ses préférences dans son profil de règles souhaitées, il ne sait pas si elles sont susceptibles d'être suivies d'effet.

Or, une connaissance a priori des services aptes à être exécutés sur le système de communication de l'appelé permettrait d'éviter une étape de spécification d'un profil de règles souhaitées inutile ou non appropriée dans la mesure où les règles souhaitées ne peuvent même pas être exécutées sur le système de communication 2.

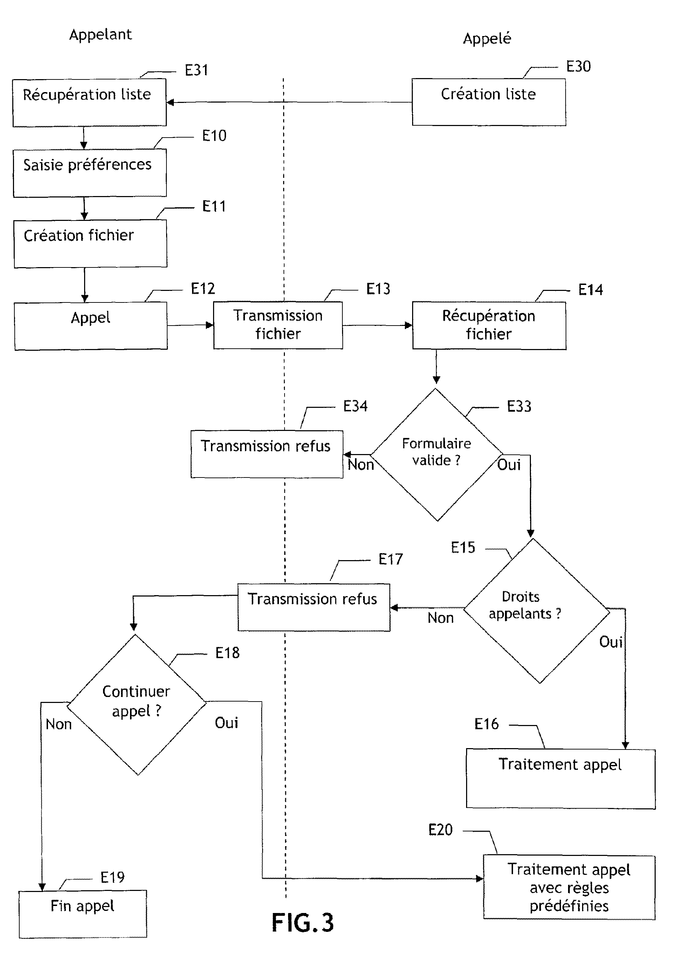

En référence aux figures 1 et 3, les différentes étapes du procédé selon un second mode (mode «publié») dans lequel l'appelant connaît, préalablement à l'appel, les services aptes à être exécutés sur le système de communication 2 de l'appelé 22, vont à présent être détaillée :

Comme représenté sur la figure 3, préalablement à toute opération, l'appelant 12 récupère une liste de services aptes à être exécutés sur le système de communication 2 de l'appelé 22 (Etape E31 sur figure 3). Cette liste peut être créée par un administrateur du second système 2 et comprendre l'ensemble des services exécutables sur les différents terminaux 20, 21 du second système de communication 2 (Etape E30 sur figure 3). Cette liste peut être obtenue par l'appelant 12 directement auprès du second système 2, par exemple en adressant, préalablement à l'appel, une requête dédiée au second système de communication 2.

Avantageusement, l'administrateur du second système de communication 2 peut mettre à disposition cette liste sur différents serveurs 30 afin que cette dernière soit, par exemple, facilement disponible depuis un site Internet. L'appelant 12 peut alors, dans ce cas, récupérer la liste auprès d'un serveur externe 30 au second système de communication 2.

De façon avantageuse, la liste est récupérée par le premier système de communication 1 sous la forme d'un formulaire modifiable. Ainsi, lorsque l'appelant 12 a téléchargé le formulaire sur le premier système de communication, l'application 2 est adaptée pour afficher le formulaire sur l'ordinateur 11 de l'appelant 12. Ce dernier peut alors spécifier ses préférences parmi une liste de services dont il est assuré qu'ils sont réalisables sur le second système de communication 2.

Le second mode possède également l'avantage de ne pas nécessiter, au niveau de l'application 14, une connaissance exhaustive des services couramment utilisés par les systèmes de communication puisque que l'appelant 12 récupère une liste correspondant à chacun des systèmes de communication avec lequel il veut établir un appel.

Avantageusement, les préférences sont spécifiées par l'appelant 12 en effectuant des modifications sur le formulaire qu'il a récupéré. Une fois les préférences de l'appelant 13 spécifiées depuis la liste qui lui a été fournie, le module 14 transforme le formulaire modifié en un fichier XML transportable. Lorsque l'appel est établi, le fichier XML est transmis au module 24 d'extraction et d'analyse comme pour le premier mode de réalisation précédemment décrit. Le fait que le fichier XML ait été généré à partir du formulaire préalablement créé par le second système de communication 2 permet de s'assurer que le module 24 sera capable de l'interpréter correctement.

Ainsi, les risques de refus de la prise en compte des préférences de l'appelant 12 dus au fait que le module 24 n'a pas réussi à déchiffrer les règles de services souhaitées indiquées dans le fichier XML, sont limités. En effet, dans le premier mode de réalisation, le fichier XML est créé à partir d'une liste de services proposés par l'application 14. Malgré l'utilisation de définitions génériques des services par les deux systèmes de communication, il se pourrait que le module 24 ne reconnaisse pas un service spécifié dans le profil de l'appelant 12 dans le cas où les noms du service dans le fichier XML reçu et dans le second système de communication 2 différeraient.

Le second mode permet également d'enregistrer et d'associer des formulaires modifiés à des profils dans un annuaire du premier système de communication 1. Ainsi, lorsque l'appelant 12 appelle une personne en utilisant son annuaire, le système de communication 1 établit l'appel en transmettant au second système de communication 2 le formulaire modifié associé à l'appelé 22.

Les services aptes à être exécutés sur le second système de communication 2 pouvant varier au cours du temps, le formulaire utilisé par l'appelant 12 pour spécifier son profil de règles souhaitées peut être désuet. Ceci peut notamment être le cas lorsque l'appelant 12 appelle un appelé 22 du second système 2 en utilisant son annuaire. Afin d'éviter la prise en compte, au niveau du second système de communication 2, d'un profil établi à partir d'un formulaire désuet, le module 24 analyse, de façon avantageuse, la validité du fichier XML créé à partir du formulaire modifié (Etape E33 sur figure 3).

Lorsque le module 24 détecte que la version du formulaire est incorrecte, un message de signalisation indiquant que les spécifications de l'appelant 12 ne seront pas prises en compte, est envoyé au premier système de communication 1 (Etape E34 sur figure 3).

Si au contraire le module détecte que la version du formulaire est correcte, il effectue la comparaison des règles souhaitées avec l'ensemble des règles prédéfinies et achemine l'appel vers le terminal 20, 21 qui le traite en fonction des règles prédéfinies par l'appelé 22 et des règles contenues dans le profil de règles souhaitées transmis par l'appelant 12 comme cela a été décrit en référence à la figure 2.

De façon avantageuse, le premier système de communication 1 permettant à un de ses utilisateurs de spécifier et de transmettre un profil de règles souhaitées vers un second système de communication peut également comporter des moyens permettant à l'utilisateur de prédéfinir des règles selon lesquels il désire traiter les appels entrants. Le premier système peut également comprendre des moyens de traitement aptes à extraire un profil de règles souhaitées reçu lors de l'établissement d'un appel entrant et aptes à traiter l'appel entrant en fonction de règles prédéfinies et du profil de règles souhaitées extrait.

De plus, bien que les différentes caractéristiques et avantages de l'invention aient été décrits en se référant d'une part, à l'utilisation d'un ordinateur muni d'une interface graphique pour spécifier les préférences d'un appelant au niveau de son système de communication, et d'autre part, à l'utilisation d'un fichier au format XML pour la transmission du profil des règles souhaitées depuis le premier système de communication vers le second système de communication, l'invention n'est pas limitée à ces exemples.

La spécification par l'appelant d'un profil de règles souhaitées pour le traitement peut tout aussi bien être réalisée depuis un terminal de téléphonie en utilisant notamment des fonctions de type DTMF (Dual-Tone Multi-frequency) et le format du fichier utilisé pour la transmission du profil peut être un format apte à être transporté par les protocoles utilisés par les systèmes de communication tels que notamment les protocoles H323 et SIP.

## Revendications

1. Procédé de gestion d'appel entre un appelant (12) d'un premier système de communication (1) et un appelé (22) d'un second système de communication (2), le second système de communication (2) étant du type permettant de traiter les appels entrants selon des règles prédéfinies choisies dans une liste de services comprenant au moins un service parmi les services d'interception d'appel, de supervision d'appel, de distribution d'appel, de regroupement d'utilisateurs ou de fonction d'appel de type « patron-secrétaires », le procédé étant du type comprenant les étapes successives de :
- spécification (E10, E11) par l'appelant (12) d'un profil de règles souhaitées pour le traitement par le second système de communication d'un appel émis par l'appelant (12) ;
- transmission (E13) pendant l'établissement de l'appel dudit profil de règles souhaitées;
- traitement (E14, E16) de l'appel reçu par le second système de communication (2) en fonction du profil de règles souhaitées transmis par l'appelant (12),
le procédé étant **caractérisé en ce que** l'étape de spécification (E10, E11) du profil de règles souhaitées consiste pour l'appelant (12) à définir les règles souhaitées à partir de ladite liste de services récupérée (E31) par l'appelant (12) préalablement à l'appel, et **en ce que** l'étape de traitement (E14, E16) de l'appel reçu s'effectue en outre en fonction desdites règles prédéfinies.

2. Procédé selon la revendication 1, **caractérisé en ce qu'**il comprend en outre une étape de paramétrage, au niveau du second système de communication (2), des droits de l'appelant (12), et **en ce que**, lors de l'étape de traitement de l'appel, les règles du profil transmis peuvent être acceptées ou refusées (E15) en tout ou partie selon les droits paramétrés pour l'appelant (12).

3. Procédé selon l'une quelconque des revendications précédentes, **caractérisé en ce que** ladite liste de services est récupérée par l'appelant (12) directement auprès du second système de communication (2).

4. Procédé selon l'une quelconque des revendications 1 à 3, **caractérisé en ce que** ladite liste de services est récupérée par l'appelant (12) auprès d'un serveur (30) externe au second système de communication (2).

5. Procédé selon l'une quelconque des revendications précédentes, **caractérisé en ce que** ledit profil de règles est transmis sous forme d'un fichier inséré dans un message d'établissement d'appel.

6. Procédé selon la revendication 6, **caractérisé en ce que** le fichier est du type XML.

7. Système de communication (1) pour l'émission par un appelant (12) d'un appel vers un second système de communication (2) dans lesquels les appels entrants peuvent être traités selon des règles prédéfinies choisies dans une liste de services comprenant au moins un service parmi les services d'interception d'appel, de supervision d'appel, de distribution d'appel, de regroupement d'utilisateurs ou de fonction d'appel de type « patron-secrétaires », le système de communication (1) comportant des moyens (13) permettant à l'appelant (12) de spécifier un profil de règles souhaitées pour le traitement dudit appel par le second système de communication (2), et des moyens (14) de transmission dudit profil de règles souhaitées lors de l'établissement de l'appel vers ledit second système de communication (2), **caractérisé en ce que** ledit système de communication (1) est apte à récupérer ladite liste de service préalablement à l'appel, et **en ce que** lesdits moyens (13) permettant à l'appelant (12) de spécifier ledit profil de règles souhaitées utilisent ladite liste récupérée.
